# EUROPEAN PATENT SPECIFICATION

(11) **EP 3 620 314 B1**
(45) Date of publication and mention of the grant of the patent: **17.02.2021**
(21) Application number: 19189401.3
(22) Date of filing: 31.07.2019
(51) Int. Cl.: B60C 27/10

(54) **TENSIONING DEVICE FOR SNOW CHAINS AND SNOW CHAIN EQUIPPED WITH SUCH A DEVICE**
SPANNVORRICHTUNG FÜR SCHNEEKETTEN UND SCHNEEKETTE MIT SOLCH EINER VORRICHTUNG
DISPOSITIF DE TENSION DE CHAÎNES À NEIGE ET CHAÎNE À NEIGE ÉQUIPÉE D'UN TEL DISPOSITIF

(30) Priority: 07.09.2018 IT 201800008412
(43) Date of publication of application: 11.03.2020
(73) Proprietor: KÖNIG S.P.A, 23867 Suello (LC) (IT)
(72) Inventor: ARRIGONI NERI, Marco, 22046 Merone (Como) (IT); FARINA, Luigi, 23843 Dolzago (Lecco) (IT)
(74) Representative: Petruzziello, Aldo

(56) References cited:
- EP-A1- 1 787 832
- JP-A- H09 193 631

## Description

The subject of the present invention is a tensioning device for snow chains and a snow chain equipped with such a device.

A snow chain, or anti-skid device, generally consists of two lateral elements (chains, flexible cables, steel wires, ropes or the like), which in use are closed in a loop on the inside and outside of a vehicle wheel respectively, which here below will also be referred to as inner ring and outer ring. These lateral elements are connected by a series of chain segments, variously arranged, generally in the shape of a diamond pattern, to achieve friction on the tread, all this completed by a device for tensioning these elements, also known as a tensioner, normally placed on the outer ring.

These tensioning devices can be of various types, for example consisting of an elastic housed in a containment block mounted on the outer ring of the snow chains, one end whereof with hook is hooked to a point of the outer ring to form a rope that exerts traction on the same.

JP H09 193631 A discloses a tire antiskid means tightening device with a take-up reel and a storage case for storing the take-up reel rotatably. First ratchet teeth are circumferentially disposed at the outer side face of one flange of the take-up reel, and second ratchet teeth meshed with the first ratchet teeth are formed at the inner side face of the storage case. A spring is provided to constantly press both ratchet teeth so as to be meshed with each other. An operating protrusion for releasing the mesh of both ratchet teeth against the energizing force of the spring by pressing, and rotating the take-up reel by rotation is formed at the center of the ratchet tooth formed face of the flange, and the end face of the operating protrusion is exposed to the outside of the case from hole formed in the storage case.

US 1787832 A1 discloses a tightening system for use with anti-skid and traction enhancement devices for wheeled vehicles comprising sealed tightening mechanism which can clutch the rotational movement applied by the user on a knob. The tightening system further comprises at least one connection assembly which is adapted to be pivotably and releasably attached to a proximal end of a surface contact member and which is adapted to be connected to the tightening mechanism. The tightening mechanism comprises a locking component which has a base plate, an inner sidewall and an outer sidewall standing perpendicular to said base plate. The inner sidewall recessed portion has a plurality of recesses which are adapted to engage with a peripheral projection of the upper clutch for holding the knob in place during locked and unlocked positions of the knob. The outer sidewall enters fully or partly, respectively in locked and unlocked positions of the knob, into a corresponding slot of said knob for sealing inner volume of the tightening mechanism from outside conditions.

EP 1839915 B1, on which the present invention is based, describes a tensioning device for snow chains including a casing, in which is arranged a pulley with a set of teeth with which are engaged alternately two detents of a pawl controlled by a manual actuation element, so that the pulley can rotate like a ratchet in one direction or the other.

On the pulley a tensioning cable is wound which, in one position of the pawl, can only be removed from the containment casing, unwinding from the pulley, and in the other position of the pawl can only re-enter the casing by winding on the pulley.

The end of the pulley carries a means of attachment to the outer ring of the snow chain, so as to cause the tensioning during the phase of re-entry of the cable into the casing.

The return of the cable into the casing, i.e. its winding on the pulley, when the pawl is placed in such a winding position by means of the actuation element, is caused by a spiral spring placed in the pulley.

The tensioning obtained with this device, due to the spiral spring, is not always adequate. This is also due to the fact that the tensioning takes place along a rope of the outer ring of the snow chain, since the cable is hooked to a point of this outer ring.

The spring is then subject to loosening over time or deterioration, which does not guarantee correct tensioning.

The object of the invention is to eliminate the disadvantages of known tensioning devices, in particular of the device that is the subject of the aforementioned patent EP 1439915 B1.

In particular, one object of the invention is to provide a tensioning device for snow chains that allows the desired tensioning to be obtained, independently of the pull force of the elastic means.

Another object again of the invention is to provide such a tensioning device that can perform the tensioning on the entire outer ring of a snow chain, rather than on a rope as is normally the case in the prior art.

Another object again of the invention is to provide such a tensioning device that can be mounted separately on a snow chain, or form an integral part thereof.

These objects are achieved by the tensioning device according to the invention which has the features of the appended independent claim 1.

Advantageous embodiments of the invention are disclosed by the dependent claims.

Substantially, the tensioning device for snow chains, apt to be mounted on the outer ring of the snow chain to cause the tensioning thereof by means of a cable that can be extracted from said device, comprises:
- a casing consisting of a base and a cover;
- a pulley, to which one end of said cable is constrained, housed in said casing and carrying a set of teeth with which at least one detent of a pawl can be engaged; wherein said base and said cover of the casing have respective circular holes wherein they house opposite end hubs of a hollow shaft of said pulley, said hollow shaft having a polygonal hole which can be engaged by a polygonal pin of a knob for the rotation of the pulley and the conferment of the desired tensioning force, when said at least one detent of the pawl is engaged with said set of teeth of the pulley.

Further features of the invention will be made clearer by the following detailed description, referred to merely as a non-limiting example embodiment thereof, illustrated in the accompanying drawings in which:
Fig. 1 is a perspective view of the tensioning device according to the invention complete with actuation knob;
Fig. 2 is a blown-up view of the device of Fig. 1;
Fig. 3 is a plan view of the device according to the invention without cover, with the pulley free to rotate;
Fig. 3a is an enlargement of a detail of Fig. 3;
Fig. 3b is an enlargement of the same detail of Fig. 3a with a component of the device removed;
Figs. 4, 4a and 4b are views similar to Figs. 3, 3a and 3b respectively, with the pulley that can rotate like a ratchet in the tensioning directions;
Fig. 5 is an enlarged perspective view of the engagement pawl with the set of teeth of the pulley;
Fig. 6 is an enlarged view of the lateral profile of the pulley;
Fig. 7 is a schematic plan view of an open snow chain on which the tensioning device is mounted according to the invention;
Fig. 8 shows the chain of Fig. 7 mounted on a vehicle wheel before the tensioning device is actuated;
Figs. 8a and 8b show the hooking of the tensioning cable to the outer ring of the snow chain;
Figs. 8c and 8d are schematic views showing the actuation of the tensioning device by the knob.

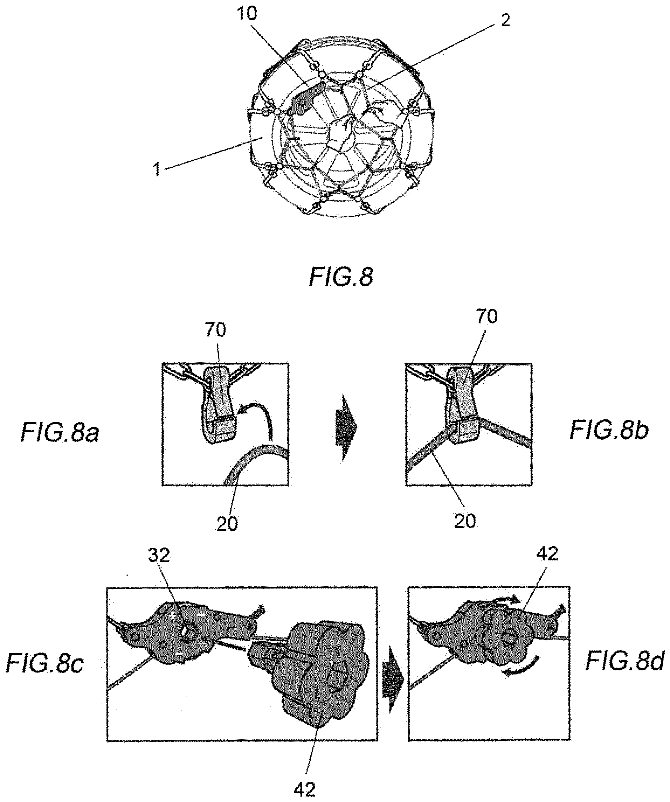

Fig. 8 shows schematically a wheel of a vehicle fitted with a tyre 1, on which is mounted an anti-skid device or snow chain, denoted overall by reference numeral 2, and provided with a tensioning device according to the invention, denoted overall by reference numeral 10, which will be described in detail here below.

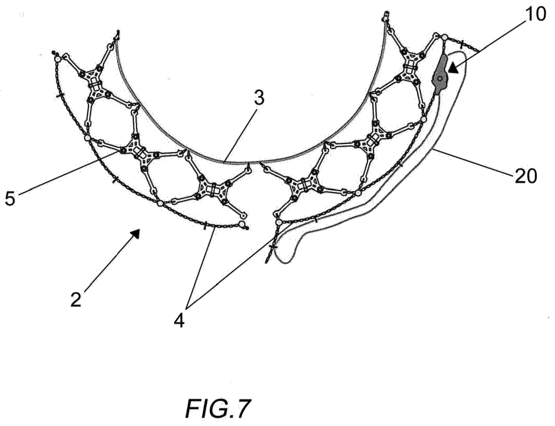

The snow chain 2, shown in open condition in Fig. 7, comprises an element 3 that can be closed in a circle or a loop on the part of the wheel intended to be turned towards the interior of the vehicle, hereinafter referred to as inner ring 3; an element 4 that can be closed in a circle or a loop on the part of the wheel intended to be turned towards the exterior of the vehicle, hereinafter referred to as outer ring; and a series of anti-skid elements 5, variously arranged on the tread of the tyre 1 of the wheel, that form the union between the inner ring 3 and the outer ring 4.

Chain 2, illustrated by way of example in Figures 7 and 8, is to be considered in itself known and may have a different conformation from that shown. Thus, for example, the anti-skid elements 5 placed on the tyre tread are shown as substantially rigid elements, made in plastic or hard rubber, but, as is well known, they could be segments of chain.

A description will now be given in detail of the tensioning device 10 according to the invention.

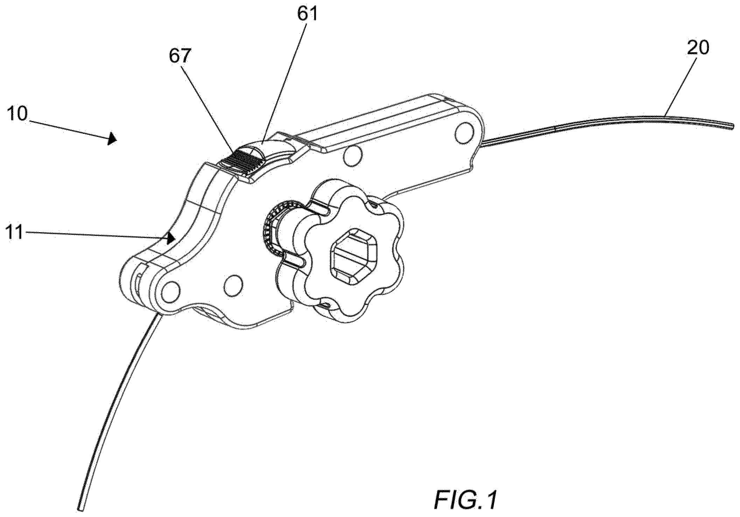

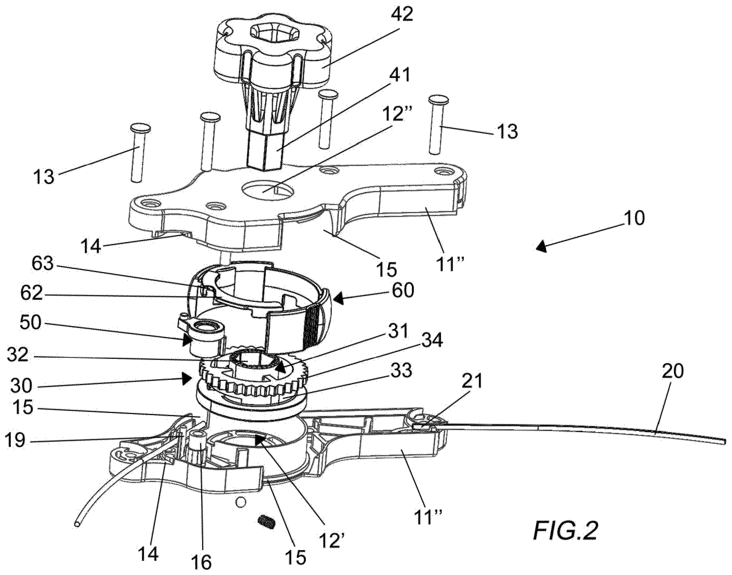

Referring to Figs. 1 and 2, where this device is shown in assembled and blown-up condition, it comprises a casing 11 consisting of a base 11' and a cover 11", provided with coaxial holes 12', 12" and joined together by screws or rivets 13.

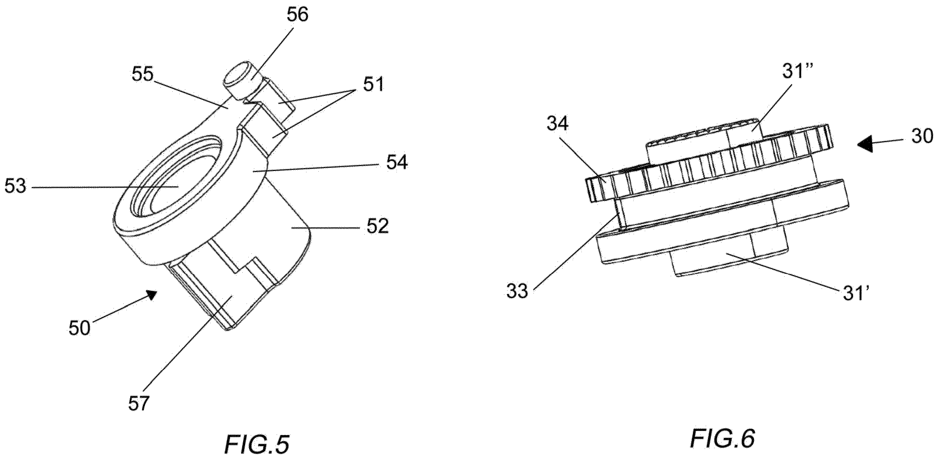

The tensioning device 10 is associated with a cable 20 closed in a loop on it. More particularly, cable 20 has an enlarged end 21, for example due to the presence of a lug, which remains blocked between base 11' and cover 11" when the casing 11 is closed, and the other end fixed to a pulley 30, shown separately in Fig. 6, around which cable 20 can be wound, at least partially, entering the casing through an opening 14 that is determined as a result of the coupling between base and cover.

The pulley 30 has centrally a hollow shaft 31 with polygonal internal profile 32, apt to be engaged by a corresponding polygonal pin 41 of an actuation knob 42, as will be explained in greater detail here below.

The shaft 31 protrudes from the two sides of the pulley 30, in order to determine t respective shanks or hubs 31', 31" suitable for housing respectively in said holes 12', 12" of the base 11' and of the cover 11" of the casing 11, so that the pulley 30 can rotate within said holes.

The pulley 30 has a seat 33 for the winding of said cable 20 and carries a set of teeth 34 on the peripheral edge of one of its two flanges (the upper one turned towards the cover 11" in the embodiment of the accompanying drawings), with which at least one detent 51 of a pawl 50 (shown enlarged in Fig. 5) can be engaged as will be explained in greater detail here below.

In mounted condition, around the pulley 30 is placed a collar 60, arranged in such a way as to be able to rotate through a limited angle around the pulley 30.

Collar 60 has two approximately diametrically opposed peripheral sections 61 accessible through respective opposing windows 15 of the casing 11. Said parts 61 have a knurled recess 67 apt to facilitate a grip by the user to allow the aforementioned rotation.

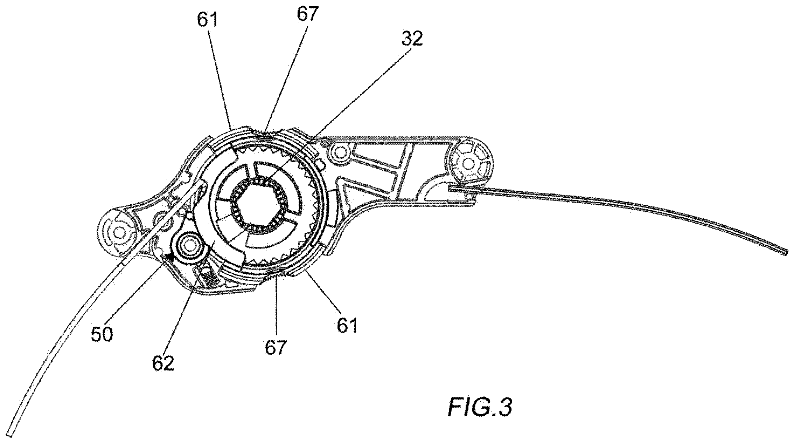

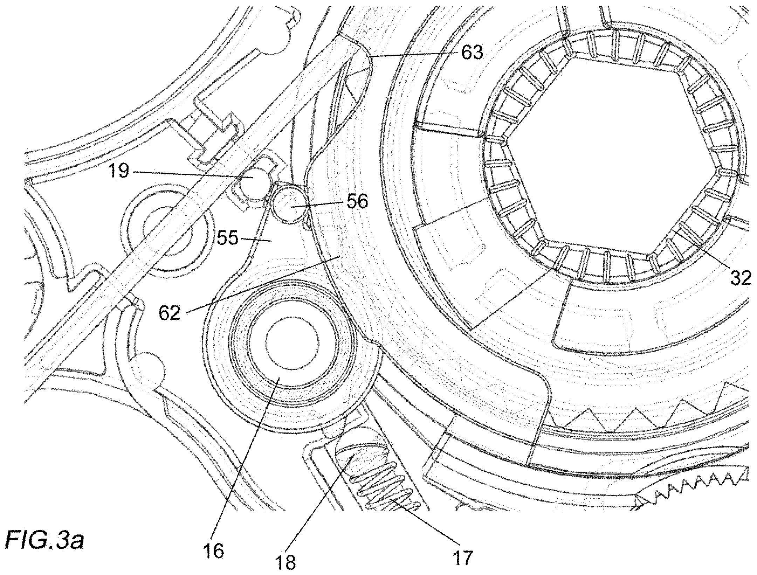

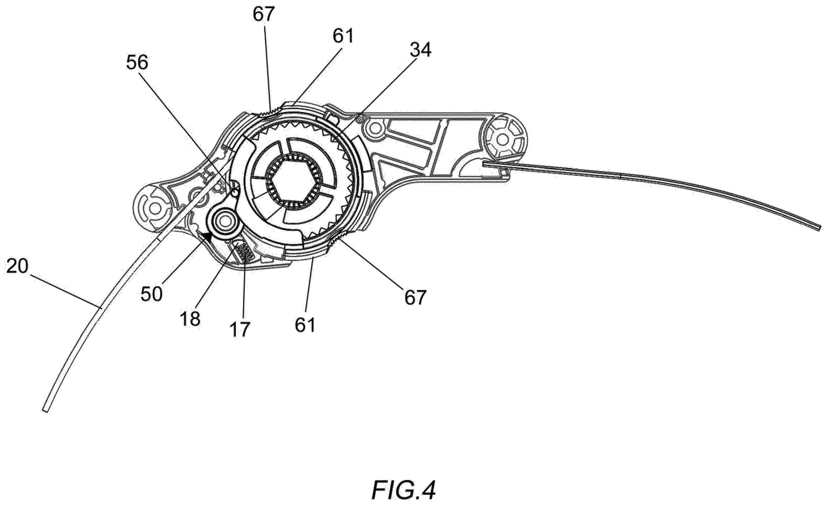

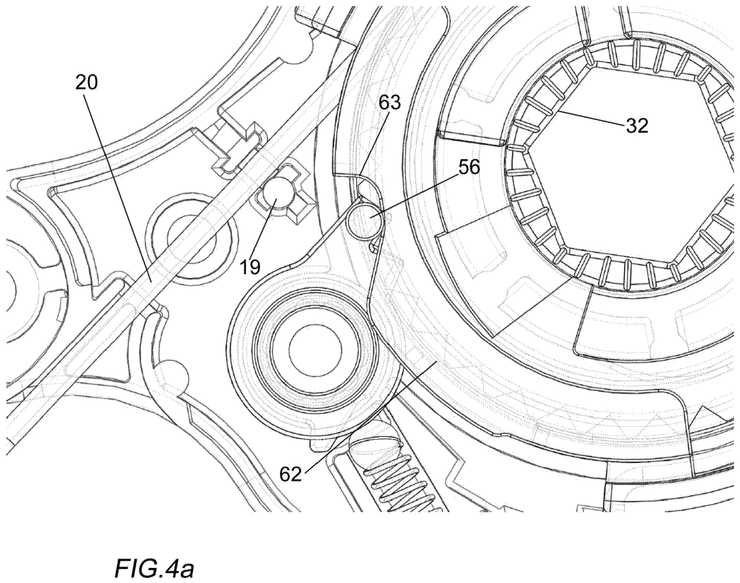

Said opposing sections 61 of the collar 60 are connected, on the side where said pawl 50 is placed, by a circular section 62 which is placed above the pulley 30, and having a diameter slightly greater than that of the pulley, so as to protrude slightly beyond the set of teeth of the latter. The circular section 62 presents a recess 63, determining a cam profile, such as to leave exposed the underlying set of teeth 34 in sight from above, as can be seen more clearly from the enlargements of Figures 3a and 4a, that are to be described in greater detail here below.

Pawl 50 has a hollow cylindrical body 52 with a through hole 53 for mounting on a small shaft 16 rising from the base 11' near the pulley 30.

The pawl 50 has at the top a widened section 54 with a projection 55, at which two of said detents 51 are formed, apt to engage the set of teeth 34 of the pulley as will be mentioned here below.

From the end of the projection 55 a small pin 56 rises, apt to engage with the cam profile of said curved section 62 of the collar 60.

From the cylindrical body 52 of the pawl 50, in opposition to the detents 51, protrudes a vertical fin 57, against which acts a spring 17 through a small ball 18, to push the pawl 50 to rotate clockwise, with reference to the drawings, and to hold said projection 55 towards the pulley 30.

From the base 11' of the casing 11 a pin 19 rises, against which the projection 55 of the pawl 50 abuts, limiting the angular excursion thereof.

Having briefly described the conformation of the tensioning device according to the invention, its functioning appears evident from the illustrations shown that will now be briefly described.

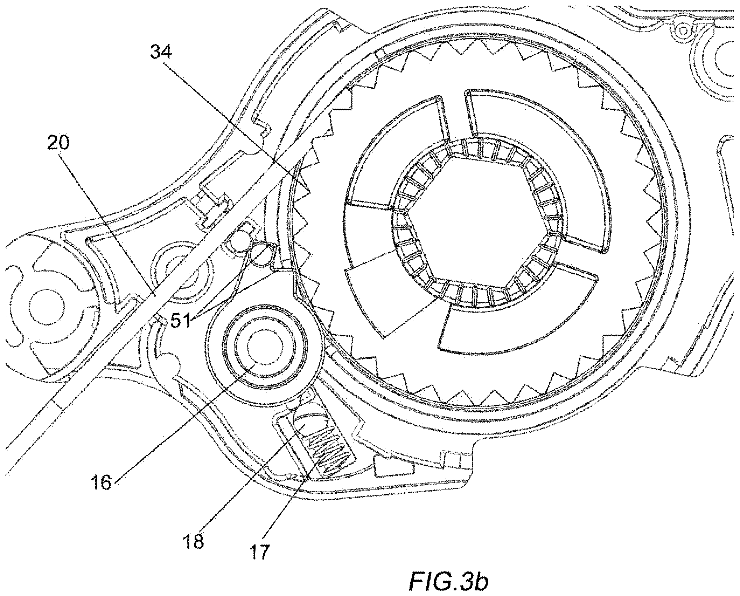

In Fig. 3, the collar 60 is in the position rotated clockwise to the right, in which the small pin 56 of the pawl 50 rests against the circular profile of the arched section 62 (Fig. 3a), keeping the detents 51 of the set of teeth 34 of the pulley apart (Fig. 3b).

In this condition, the pulley 30 can rotate freely and the cable 20 can be unwound manually from it.

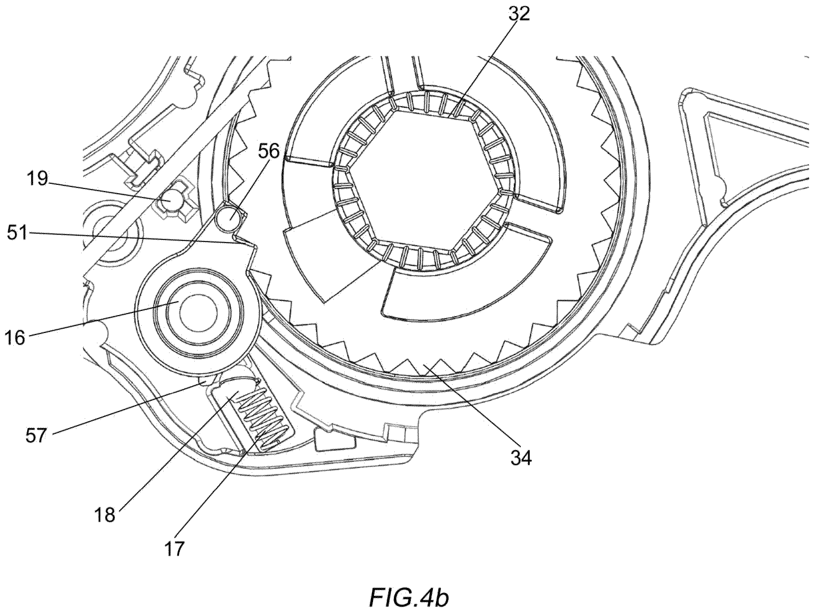

By turning collar 60 in an anticlockwise direction, acting on the knurled recesses 67 of its opposing portions 61 accessible through the windows 15 of the casing 11, small pin 56 slides on the cam profile of the arched section 62, arranging itself in recess 63 (Fig. 4a), thus bringing the detents 51 into engagement with the set of teeth 34 (Fig. 4b).

In this condition the pulley 30 is prevented from rotating anticlockwise, i.e. in the direction of the unwinding of the cable 20, but it can only rotate clockwise, like a ratchet, for the winding of the cable 20.

The rotation of the pulley 30 is carried out by means of the knob 42, bringing its polygonal pin 41 in engagement with the polygonal hole 32 provided in the pulley. In this way it is possible to exert a considerable tensioning force on the cable 20.

As shown schematically in Figs. 7 and 8, and as said previously, cable 20 is conveniently closed in a loop on the tensioning device 10, and is mounted on the outer ring 4 of the snow chain 2 by means of hooks 70 provided on the latter, as schematically shown in Figs. 8a and 8b.

Figs. 8c and 8d show schematically the ratchet actuation of the tensioning device by means of the knob 42.

Since the cable 20 is closed in a loop on the outer ring 4 of the snow chain 2, the tensioning of the snow chain takes place on the whole outer ring 4 and not only on a rope, so that it is possible to exert a considerable tensioning force with the knob 42, which is not possible with the spring actuation devices of the prior art, for example the subject of EP 1839915B1.

As already mentioned, in Figs. 7 and 8 the tensioning device 10 is shown constrained to the outer ring 4 of the snow chain 2, but it could be hooked to the outer ring 4, in the same way as cable 20, by means of the hooks 70 of Figs. 8a and 8b.

In this case, the actuation device 10 would be a completely autonomous unit, separated from the snow chain 2 and mountable on it.

The tensioning cable 20 is made of inelastic material, such as steel, a covered metal core, hard plastic material, such as nylon or Teflon, and the like.

The advantages of the tensioning device according to the invention, particularly suitable in cases wherein considerable tensioning forces have to be imparted, are clear from the above.

Naturally, the invention is not limited to the particular embodiment previously described and illustrated in the accompanying drawings, but numerous detailed changes may be made thereto within the reach of the person skilled in the art, without thereby departing from the scope of the invention itself, as defined in the appended claims.

## Claims

1. Tensioning device (10) for snow chains (2), apt to be mounted on the outer ring (4) of the snow chain (2) to cause tensioning thereof by means of a cable (20) which can be extracted from said device (10), said device (10) comprising:
- a casing (11) consisting of a base (11') and a cover (11");
- a pulley (30), whereto one end of said cable (20) is constrained, housed in said casing (11) and bearing a peripheral set of teeth (34) with which at least one detent (51) of a pawl (50) engages;
said base (11') and said cover (11") of the casing (11) have respective circular holes (12', 12") in which opposite end hubs (31', 31") of a hollow shaft (31) of said pulley (30) are housed, said hollow shaft (31) having a polygonal hole (32) engageable by a polygonal pin (41) of a knob (42) for the rotation of the pulley (30) and the conferment of the desired tensioning force, when said at least one detent (51) of the pawl (50) is engaged with said set of teeth (34) of the pulley, said tensioning device is **characterised in that** a collar (60) is provided which can be actuated manually through opposite windows (15) of the casing (11) between at least two positions to bring said at least one detent (51) of the pawl (50) in engagement or disengagement with said set of teeth (34) of the pulley (30).

2. Tensioning device (10) according to claim 1, **characterised in that** the other end (21) of said cable (20) is constrained between said base (11') and said cover (11") of the casing (11), such that the cable (20) forms a closed loop.

3. Tensioning device (10) according to claim 1 or 2, **characterised in that** said collar (60) has approximately opposite peripheral parts (61) with a knurled recess (67) for being rotationally operated between said at least two angular positions through said opposing windows (15) of the casing (11).

4. Tensioning device (10) according to any one of the preceding claims, wherein said pawl (50) has a small pin (56) rising from a projection (55) carrying said at least one detent (51), pushed by elastic means (17) in engagement with a cam profile of an arched portion (62) of said collar (60), having a recess (63), such that in a position of the collar (60) said pin (56) keeps said at least one detent (51) spaced apart from the set of teeth (34) of the pulley (30), and in another position of the collar (60) said pin (56) enters said recess (63) of the arched portion (62) bringing into engagement said at least one detent (51) with said set of teeth (34), allowing rotation of the pulley (30) in the tensioning direction, like a ratchet.

5. Tensioning device (10) according to any one of the preceding claims, wherein said pulley (30) has a central seat (33) apt to receive said cable (20), said set of teeth (34) being provided on a flange of the pulley turned towards said cover (11") of the casing (11).

6. Tensioning device (10) according to claim 5, wherein said pawl (50) is mounted on a shaft (16) rising from said base (11'), and has a fin (57) approximately opposite to said projection (55), against which act said elastic means constituted by a spring (17) pushing a small ball (18) against the pawl (50).

7. Tensioning device (10) according to any one of claims 2 to 6, **characterised in that** said cable (20) closed in a loop on the device (10) is constrained to said outer ring (4) of the snow chain (2) by hooks (70).

8. Snow chain (2) comprising
- an inner ring (3) apt to be closed on the part of a wheel intended to be turned towards the interior of a vehicle,
- an outer ring (4) apt to be closed on the part of the wheel intended to be turned towards the exterior of the vehicle and
- a series of anti-skid elements (5) arranged on the tread of the tyre (1) of the wheel, forming the union between said inner ring (3) and said outer ring (4), and
- a tensioning device arranged on said outer ring (4),
**characterised in that** said tensioning device (10) has the features according to any one of the preceding claims, wherein said tensioning cable (20) is closed in a loop on the device (10) and constrained to the outer ring (4) of the snow chain (2).

## Patentansprüche

1. Spanngerät (10) für Schneeketten (2), das zur Anbringung am äußeren Ring (4) der Schneekette (2) geeignet ist, um Spannen derselben mittels eines Kabels (20) zu bewirken, das aus dem Gerät (10) herausgezogen werden kann, das Gerät (10) umfassend:
- ein Gehäuse (11), das aus einer Basis (11') und einer Abdeckung (11") besteht;
- eine Scheibe (30), an der ein Ende des Kabels (20) eingespannt ist, und die im Gehäuse (11) eingefasst ist und einen umfänglichen Satz von Zähnen (34) trägt, mit denen zumindest eine Sperrung (51) einer Klinke (50) in Eingriff tritt;
wobei die Basis (11') und die Abdeckung (11") des Gehäuses (11) jeweilige kreisförmige Löcher (12', 12") aufweisen, in denen gegenüberliegende Endnaben (31', 31") einer Hohlwelle (31) der Scheibe (30) eingefasst sind, wobei die Hohlwelle (31) ein Vieleckloch (32) aufweist, das durch einen Vieleckstift (41) eines Knopfs (42) zur Drehung der Scheibe (30) und zur Übertragung der erwünschten Spannkraft in Eingriff genommen werden kann, wenn die zumindest eine Sperrung (51) der Klinke (50) mit dem Satz von Zähnen (34) der Scheibe in Eingriff steht, wobei das Spanngerät **dadurch gekennzeichnet ist, dass** ein Bund (60) vorgesehen ist, der manuell durch gegenüberliegende Fenster (15) des Gehäuses (11) zwischen zumindest zwei Positionen betätigt werden kann, um die zumindest eine Sperrung (51) der Klinke (50) in Eingriff oder außer Eingriff mit dem Satz von Zähnen (34) der Scheibe (30) zu bringen.

2. Spanngerät (10) nach Anspruch 1, **dadurch gekennzeichnet, dass** das andere Ende (21) des Kabels (20) zwischen der Basis (11') und der Abdeckung (11") des Gehäuses (11) eingespannt ist, sodass das Kabel (20) eine geschlossene Schleife ausbildet.

3. Spanngerät (10) nach Anspruch 1 oder 2, **dadurch gekennzeichnet, dass** der Bund (60) ungefähr gegenüberliegende Umfangsteile (61) mit einer gerändelten Aussparung (67) zum Drehbetrieb zwischen den zumindest zwei Winkelpositionen durch die gegenüberliegenden Fenster (15) des Gehäuses (11) aufweist.

4. Spanngerät (10) nach einem der vorhergehenden Ansprüche, wobei die Klinke (50) einen kleinen Stift (56), der sich von einem Vorsprung (55) erhebt, der die zumindest eine Sperrung (51) trägt, geschoben durch elastische Mittel (17) in Eingriff mit einem Nockenprofil eines bogenförmigen Abschnitts (62) des Bunds (60), mit einer Aussparung (63), sodass in einer Position des Bunds (60) der Stift (56) die zumindest eine Sperrung (51) beabstandet zum Satz von Zähnen (34) der Scheibe (30) hält und in einer anderen Position des Bunds (60) der Stift (56) in die Aussparung (63) des bogenförmigen Abschnitts (62) eintritt und die zumindest eine Sperrung (51) mit dem Satz von Zähnen (34) in Eingriff bringt, wodurch Drehung der Scheibe (30) in der Spannrichtung, wie eine Ratsche, ermöglicht ist.

5. Spanngerät (10) nach einem der vorhergehenden Ansprüche, wobei die Scheibe (30) einen mittigen Sitz (33) aufweist, der zum Aufnehmen des Kabels (20) geeignet ist, wobei der Satz von Zähnen (34) an einem Flansch der Scheibe vorgesehen ist, der zur Abdeckung (11") des Gehäuses (11) gewandt ist.

6. Spanngerät (10) nach Anspruch 5, wobei die Klinke (50) an einem Schaft (16), der sich von der Basis (11') erhebt, angebracht ist und einen Grat (57) ungefähr gegenüber dem Vorsprung (55) aufweist, gegen den elastische Mittel einwirken, die durch eine Feder (17) gebildet sind, welche eine kleine Kugel (18) an die Klinke (50) drückt.

7. Spanngerät (10) nach einem der Ansprüche 2 bis 6, **dadurch gekennzeichnet, dass** das Kabel (20), das in einer Schleife am Gerät (10) geschlossen ist, am äußeren Ring (4) der Schneekette (2) durch Haken (70) eingespannt ist.

8. Schneekette (2), umfassend:
- einen inneren Ring (3), der dazu geeignet ist, am Teil eines Rads geschlossen zu sein, das zur Innenseite eines Fahrzeugs gedreht werden soll,
- einen äußeren Ring (4), der dazu geeignet ist, am Teil des Rads geschlossen zu sein, das zur Außenseite des Fahrzeugs gedreht werden soll, und
- eine Reihe von Gleitschutzelementen (5), die auf der Lauffläche des Reifens (1) des Rads angeordnet sind und die Vereinigung zwischen dem inneren Ring (3) und dem äußeren Ring (4) ausbilden, und
- ein Spanngerät, das am äußeren Ring (4) angeordnet ist,
**dadurch gekennzeichnet, dass** das Spanngerät (10) die Merkmale nach einem der vorhergehenden Ansprüche aufweist, wobei das Kabel (20) in einer Schleife am Gerät (10) geschlossen ist und am äußeren Ring (4) der Schneekette (2) eingespannt ist.

## Revendications

1. Dispositif de tension (10) pour des chaînes à neige (2), apte à être monté sur l'anneau extérieur (4) de la chaîne à neige (2) pour tendre celle-ci à l'aide d'un câble (20) pouvant être extrait dudit dispositif (10), ledit dispositif (10) comprenant :
- un boîtier (11) consistant en une base (11') et un couvercle (11") ;
- une poulie (30) sur laquelle une extrémité dudit câble (20) est contrainte, logée dans ledit boîtier (11) et portant un ensemble de dents périphérique (34) avec lequel s'engage au moins une détente (51) d'un cliquet (50) ;
ladite base (11') et ledit couvercle (11") du boîtier (11) présentent des trous circulaires (12', 12") respectifs dans lesquels sont logés des moyeux d'extrémité opposés (31', 31") d'un arbre creux (31) de ladite poulie (30), ledit arbre creux (31) présentant un trou polygonal (32) susceptible d'être engagé par une broche polygonale (41) d'un bouton (42) pour la rotation de la poulie (30) et l'application de la force de tension souhaitée, lorsque ladite au moins une détente (51) du cliquet (50) est engagée avec ledit ensemble de dents (34) de la poulie, ledit dispositif de tension étant **caractérisé en ce que** il est prévu un collier (60) pouvant être actionné manuellement à travers des fenêtres opposées (15) du boîtier (11) entre au moins deux positions pour engager ou désengager ladite au moins une détente (51) du cliquet (50) par rapport audit ensemble de dents (34) de la poulie (30).

2. Dispositif de tension (10) selon la revendication 1, **caractérisé en ce que** l'autre extrémité (21) dudit câble (20) est contrainte entre ladite base (11') et ledit couvercle (11") du boîtier (11), de manière à ce que le câble (20) forme une boucle fermée.

3. Dispositif de tension (10) selon la revendication 1 ou 2, **caractérisé en ce que** ledit collier (60) présente des parties périphériques (61) approximativement opposées avec un évidement cranté (67), pour être actionné de façon rotative entre lesdites au moins deux positions angulaires à travers lesdites fenêtres opposées (15) du boîtier (11).

4. Dispositif de tension (10) selon l'une quelconque des revendications précédentes, dans lequel ledit cliquet (50) présente une petite broche (56) s'élevant à partir d'une saillie (55) portant ladite au moins une détente (51), poussée par un moyen élastique (17) en engagement avec un profil de came d'une partie arquée (62) dudit collier (60), comportant un évidement (63), de telle façon que dans une position du collier (60), ladite broche (56) maintient ladite au moins une détente (51) à distance de l'ensemble de dents (34) de la poulie (30), et dans une autre position du collier (60), ladite broche (56) pénètre dans ledit évidement (63) de la partie arquée (62), mettant ladite au moins une détente (51) en engagement avec ledit ensemble de dents (34), permettant la rotation de la poulie (30) dans la direction de tension, comme un rochet.

5. Dispositif de tension (10) selon l'une quelconque des revendications précédentes, dans lequel ladite poulie (30) présente un siège central (33) apte à recevoir ledit câble (20), ledit ensemble de dents (34) étant disposé sur un rebord de la poulie tourné vers ledit couvercle (11") dudit boîtier (11).

6. Dispositif de tension (10) selon la revendication 5, dans lequel ledit cliquet (50) est monté sur un arbre (16) s'élevant à partir de ladite base (11'), et présente une ailette (57) approximativement opposée à ladite saillie (55), contre laquelle agit ledit moyen élastique constitué d'un ressort (17) poussant une petite bille (18) contre le cliquet (50).

7. Dispositif de tension (10) selon l'une quelconque des revendications 2 à 6, **caractérisé en ce que** ledit câble (20) fermé en une boucle sur le dispositif (10) est contraint sur ledit anneau extérieur (4) de la chaîne à neige (2) par des crochets (70).

8. Chaîne à neige (2) comprenant :
- un anneau intérieur (3) apte à être fermé sur la partie d'une roue destinée à être tournée vers l'intérieur d'un véhicule,
- un anneau extérieur (4) apte à être fermé sur la partie de la roue destinée à être tournée vers l'extérieur du véhicule, et
- une série d'éléments antidérapants (5) disposés sur la bande de roulement du pneumatique (1) de la roue, formant l'union entre ledit anneau intérieur (3) et ledit anneau extérieur (4), et
- un dispositif de tension disposé sur ledit anneau extérieur (4),
**caractérisée en ce que** ledit dispositif de tension (10) présente les éléments selon l'une quelconque des revendications précédentes, ledit câble de tension (20) étant fermé en une boucle sur le dispositif (10) et contraint sur l'anneau extérieur (4) de la chaîne à neige (2).
